# FASCICULE DE BREVET EUROPEEN

(11) **EP 4 481 710 B1**
(45) Date de publication et mention de la délivrance du brevet: **13.05.2026**
(21) Numéro de dépôt: 24178309.1
(22) Date de dépôt: 27.05.2024
(51) Int. Cl.: G08G 5/21, G08G 5/26, G08G 5/53, G08G 5/55, G08G 5/58

(54) **PROCÉDÉ ET SYSTÈME DE COMMUNICATION AUTOMATIQUE D'UN AÉRONEF**
VERFAHREN UND SYSTEM ZUR AUTOMATISCHEN KOMMUNIKATION EINES FLUGZEUGS
METHOD AND SYSTEM FOR AUTOMATICALLY COMMUNICATING AN AIRCRAFT

(30) Priorité: 23.06.2023 FR 2306603
(43) Date de publication de la demande: 25.12.2024
(73) Titulaire: Airbus (S.A.S.), 31700 Blagnac (FR)
(72) Inventeur: LANCELOT, François, 31700 BLAGNAC (FR); MERMET, Anaïs, 31700 BLAGNAC (FR); FERSING, Laura, 31700 BLAGNAC (FR); PASTRE, Thomas, 31700 BLAGNAC (FR)
(74) Mandataire: Airbus-OPS SAS

(56) Documents cités:
- US-A1- 2008 039 988
- US-A1- 2020 251 002
- US-A1- 2020 258 405
- US-A1- 2021 287 560
- US-A1- 2022 284 821

## Description

L'invention est relative au domaine des communications des aéronefs avec le contrôle aérien. Il est connu, dans une situation d'incapacité d'un pilote de l'aéronef empêchant ledit pilote de contrôler l'aéronef, en particulier lorsque l'aéronef dispose d'un pilote unique, de déterminer automatiquement (par un système avionique de l'aéronef) une trajectoire de secours (« contingency trajectory » en anglais) permettant d'amener l'aéronef jusqu'à un aéroport de déroutement, et de guider automatiquement l'aéronef selon cette trajectoire de secours. Le document FR3121208A1 décrit un procédé et un système permettant la génération d'une telle trajectoire de secours vers une piste d'atterrissage d'un aéroport de déroutement. Lorsqu'un pilote contrôle l'aéronef, il communique avec le contrôle aérien en particulier pour communiquer un plan de vol de l'aéronef et des modifications du plan de vol. Lorsque le pilote est en situation d'incapacité, il ne peut plus communiquer avec le contrôle aérien, alors même qu'il serait important d'informer le contrôle aérien du changement de trajectoire de l'aéronef afin de garantir la sécurité du vol par rapport au trafic environnant. Il existe donc le besoin d'une solution permettant d'informer le contrôle aérien d'une telle situation.

Les documents US 2008/039988 A1 et US 2020/258405 A1 sont aussi pertinents pour la présente invention.

### EXPOSE DE L'INVENTION :

La présente invention a notamment pour but d'apporter une solution à ce problème. Elle concerne un procédé de communication automatique d'un aéronef vers au moins un centre de contrôle aérien. Le procédé est remarquable en ce qu'il comprend les étapes suivantes mises en œuvre de façon automatique par une circuiterie électronique embarquée dans l'aéronef :
- une première étape consistant à recevoir une information relative à l'activation d'un guidage automatique de l'aéronef selon une trajectoire de secours lors d'une situation d'incapacité d'un pilote de l'aéronef, la trajectoire de secours correspondant à une trajectoire déterminée de façon automatique par un système avionique de l'aéronef en réponse à une détection de la situation d'incapacité du pilote ;
- une deuxième étape consistant à élaborer puis à envoyer au moins un premier message sur une première fréquence de communication sélectionnée avant l'activation du guidage de l'aéronef selon la trajectoire de secours, cet au moins un premier message ayant pour objet d'informer le contrôle aérien d'une part de l'activation du guidage automatique de l'aéronef selon la trajectoire de secours et d'autre part de la poursuite de l'envoi de messages sur une deuxième fréquence de communication dédiée aux communications en situation d'urgence ;
- une troisième étape consistant à élaborer puis à envoyer au moins un deuxième message sur la deuxième fréquence de communication, ce deuxième message ayant pour objet d'informer le contrôle aérien de l'activation du guidage automatique de l'aéronef selon la trajectoire de secours ;
- une quatrième étape, pendant le vol de l'aéronef selon la trajectoire de secours, consistant à recevoir des informations relatives à des manœuvres que l'aéronef va mettre en œuvre pour suivre la trajectoire de secours, et à élaborer puis envoyer un ensemble de messages sur la deuxième fréquence de communication, les messages de l'ensemble de messages ayant pour objet d'informer le contrôle aérien de manœuvres que l'aéronef va mettre en œuvre.

Ainsi, le procédé conforme à l'invention permet d'informer le contrôle aérien de l'activation de la trajectoire de secours et des différentes manœuvres de l'aéronef qui vont être mises en œuvre. Le fait d'envoyer l'au moins un premier message sur la première fréquence sélectionnée avant la situation d'incapacité du pilote, puis des messages ultérieurs sur la deuxième fréquence dédiée aux communications en situation d'urgence permet tout d'abord d'attirer l'attention d'un contrôleur aérien sur la situation de l'aéronef et sur la nécessité d'écouter les communications sur la deuxième fréquence, puis de communiquer de façon plus sûre sur la deuxième fréquence, celle-ci étant moins encombrée par des communications issues d'autres aéronefs puisqu'elle est réservée aux situations d'urgence.

Selon différents modes de réalisation pouvant être pris isolément ou en combinaison :
- les différents messages envoyés vers le centre de contrôle aérien sont des messages audio produits par synthèse vocale ;
- le procédé comporte une étape, avant la deuxième étape, au cours de laquelle un code transpondeur de l'aéronef utilisé pour les communications vers le contrôle aérien est remplacé par un code transpondeur spécifique à une situation d'urgence ;
- la deuxième étape comprend une première sous-étape d'élaboration puis d'envoi d'un premier message initial ayant pour objet d'informer le contrôle aérien de l'activation du guidage automatique de l'aéronef selon la trajectoire de secours, ainsi qu'une deuxième sous-étape mise en œuvre au bout d'une première durée prédéterminée après la première sous-étape, d'envoi d'un premier message subséquent ayant pour objet d'une part de rappeler au contrôle aérien l'activation du guidage automatique de l'aéronef selon la trajectoire de secours et d'autre part d'informer le contrôle aérien de la poursuite de l'envoi de messages sur la deuxième fréquence de communication dédiée aux communications en situation d'urgence ;
- la troisième étape comprend une première sous-étape d'élaboration puis d'envoi d'un deuxième message initial ayant pour objet d'informer le contrôle aérien de l'activation du guidage automatique de l'aéronef selon la trajectoire de secours, ainsi qu'une deuxième sous-étape mise en œuvre au bout d'une deuxième durée prédéterminée après la première sous-étape, d'élaboration puis d'envoi d'un deuxième message subséquent ayant pour objet de donner au contrôle aérien des informations relatives à la trajectoire de secours ;
- la quatrième étape comprend en outre l'envoi de messages additionnels sur la deuxième fréquence, ces messages additionnels étant envoyés selon une période de temps prédéfinie lorsqu'un intervalle temporel entre deux messages consécutifs de l'ensemble de messages est supérieur à ladite période ;
- la quatrième étape comprend en outre l'envoi de messages relatifs à des événements survenant pendant le vol de l'aéronef selon la trajectoire de secours ;
- lors du vol de l'aéronef le long d'une partie de la trajectoire de secours correspondant à une approche d'une piste d'atterrissage d'un aéroport, la quatrième étape comprend en outre l'envoi des différents messages sur une fréquence spécifique à cette approche.

L'invention est également relative à un système de communication embarqué à bord d'un aéronef, ce système comprenant de la circuiterie électronique prévue pour mettre en œuvre un procédé de communication tel que précité.

L'invention est également relative à un aéronef comprenant un tel système de communication.

### DESCRIPTION DETAILLEE :

L'invention sera mieux comprise à la lecture de la description qui suit et à l'examen des figures annexées.
La figure 1 représente un aéronef comprenant un système de communication.
La figure 2 illustre de façon schématique un système de communication d'un aéronef conforme à un mode de réalisation de l'invention.
La figure 3 illustre un procédé de communication d'un aéronef conforme à un mode de réalisation de l'invention.
La figure 4 illustre l'envoi de messages de radiocommunication dans le cadre du procédé de la figure 3, sur deux fréquences de communication F1 et F2 en fonction du temps t.
La figure 5 illustre des exemples de contenu de messages (en anglais conformément aux procédures aéronautiques) susceptibles d'être envoyés par le système de communication.

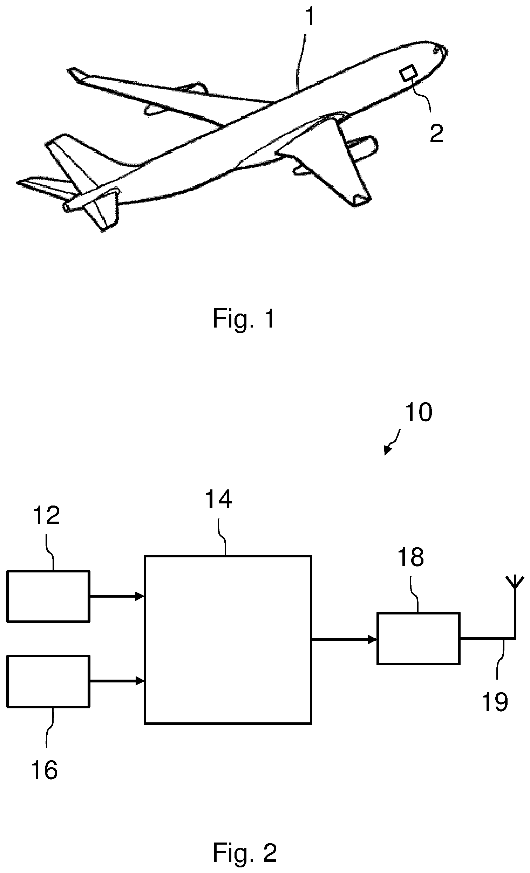

L'aéronef 1 représenté sur la figure 1 comprend un système de communication 10 tel que représenté sur la figure 2. Le système de communication 10 comprend de la circuiterie électronique 14 reliée en entrée à une première source d'informations 12 ainsi qu'à une deuxième source d'informations 16. La circuiterie électronique 14 est également reliée en sortie à un dispositif de radiocommunication 18, par exemple de type VHF (« Very High Frequency » en anglais), relié à une antenne 19. Selon un mode de réalisation, la circuiterie électronique 14 correspond à un calculateur avionique de l'aéronef. Selon un autre mode de réalisation, la circuiterie électronique 14 correspond à un circuit logique programmable de type FPGA. Le système de communication 10 est par exemple implanté dans une baie avionique 2 de l'aéronef 1.

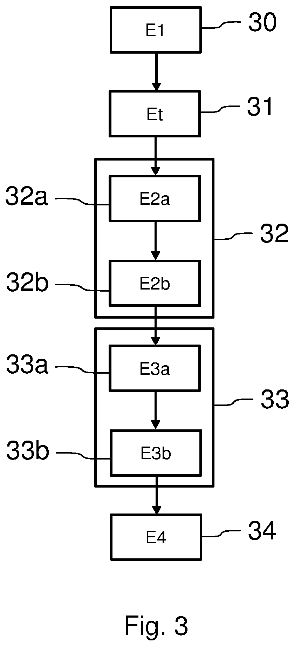

La circuiterie électronique 14 est configurée pour mettre en œuvre le procédé de communication illustré par la figure 3.

Une première étape 30 du procédé, libellée E1 sur la figure, consiste à recevoir une information relative à l'activation d'un guidage automatique de l'aéronef selon une trajectoire de secours lors d'une situation d'incapacité d'un pilote de l'aéronef. La circuiterie électronique 14 reçoit cette information de la première source d'information 12. La première source d'information correspond par exemple à un calculateur de guidage de l'aéronef, à un calculateur de gestion de vol de l'aéronef, ou encore à un calculateur avionique configuré pour détecter et gérer une situation d'incapacité d'un pilote de l'aéronef. En particulier, ce calculateur avionique est configuré pour déterminer de façon automatique la trajectoire de secours en réponse à une détection d'une situation d'incapacité du pilote de l'aéronef. La trajectoire de secours est prévue pour permettre un atterrissage de l'aéronef sur une piste d'atterrissage d'un aéroport de déroutement.

Suite à la réception de ladite information, dans une deuxième étape 32 du procédé, la circuiterie électronique 14 élabore au moins un premier message puis commande l'envoi, par le dispositif de radiocommunication 18, de l'au moins un premier message sur une première fréquence de communication F1 sélectionnée avant l'activation du guidage automatique de l'aéronef selon la trajectoire de secours. Cet au moins un premier message a pour objet d'informer le contrôle aérien d'une part de l'activation du guidage de l'aéronef selon la trajectoire de secours et d'autre part de la poursuite de l'envoi de messages sur une deuxième fréquence de communication F2 dédiée aux communications en situation d'urgence. La première fréquence de communication F1 correspond notamment à une fréquence déjà utilisée par le pilote avant d'être dans la situation d'incapacité, pour communiquer avec le contrôle aérien. Il s'agit donc d'une fréquence sur laquelle le contrôle aérien, ainsi que les aéronefs environnants, s'attendent à recevoir des communications en provenance de l'aéronef 1. Ainsi, grâce au premier message, le contrôle aérien ainsi que les aéronefs environnants sont informés de la situation d'urgence de l'aéronef.

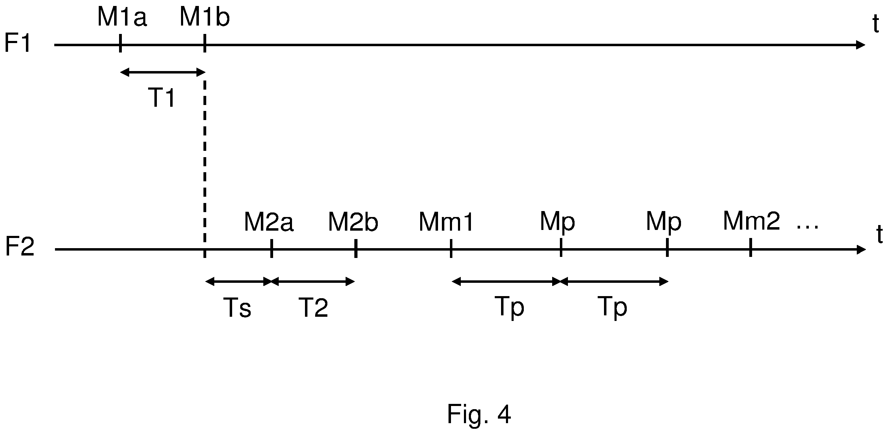

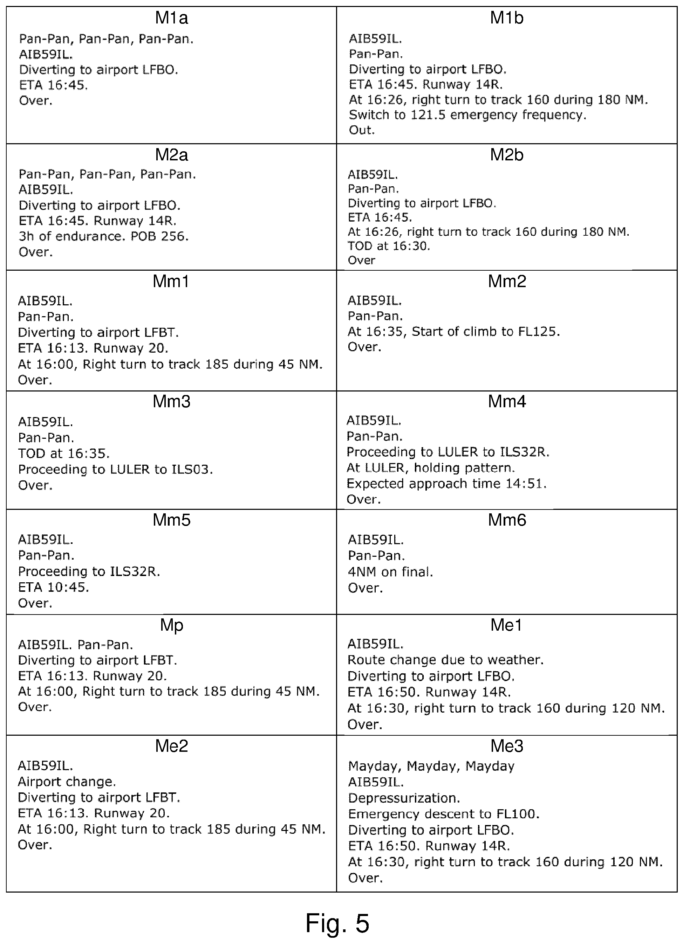

Dans un mode particulier de réalisation, la deuxième étape 32 comprend une première sous-étape 32a, libellée E2a sur la figure, au cours de laquelle la circuiterie électronique 14 élabore un premier message initial M1a puis commande l'envoi, par le dispositif de radiocommunication 18, du premier message initial M1a, le premier message initial M1a ayant pour objet d'informer le contrôle aérien de l'activation du guidage de l'aéronef selon la trajectoire de secours. La deuxième étape 32 comprend en outre une deuxième sous-étape 32b, libellée E2b sur la figure et mise en œuvre au bout d'une première durée prédéterminée T1 après la première sous-étape 32a. Cette première durée T1 est par exemple égale à 30 secondes. Au cours de la deuxième sous-étape 32b, la circuiterie électronique 14 commande l'envoi, par le dispositif de radiocommunication 18, d'un premier message subséquent M1b ayant pour objet d'une part de rappeler au contrôle aérien l'activation du guidage de l'aéronef selon la trajectoire de secours et de donner des informations synthétiques sur la trajectoire de secours, et d'autre part d'informer le contrôle aérien de la poursuite de l'envoi de messages sur la deuxième fréquence de communication F2 dédiée aux communications en situation d'urgence. Ainsi, le premier message initial permet d'attirer l'attention des auditeurs sur la situation d'urgence de l'aéronef, de telle façon que ceux-ci sont davantage attentifs lors de leur réception du premier message subséquent. De façon avantageuse, le premier message subséquent reprend un contenu similaire au contenu du premier message initial, complété par les informations synthétiques sur la trajectoire de secours. Les contenus des messages M1a et M1b sont par exemple tels qu'illustrés sur la figure 5. La chronologie d'envoi des messages M1a et M1b sur la première fréquence F1 est illustrée sur la figure 4.

Suite à l'envoi du premier message lors de la deuxième étape 32, dans une troisième étape 33 du procédé, la circuiterie électronique 14 élabore au moins un deuxième message puis commande l'envoi, par le dispositif de radiocommunication 18, de l'au moins un deuxième message sur une deuxième fréquence de communication F2 dédiée aux communications en situation d'urgence. Cet au moins un deuxième message a pour objet d'informer le contrôle aérien de l'activation du guidage de l'aéronef selon la trajectoire de secours. La deuxième fréquence de communication F2 dédiée aux communications en situation d'urgence correspond par exemple à une fréquence de 121,5 MHz. L'envoi de l'au moins un deuxième message permet d'initier une communication avec le contrôle aérien sur cette deuxième fréquence de communication F2, en renvoyant les informations déjà envoyées sur la première fréquence de communication F1. Ainsi, lorsque ces deux fréquences sont écoutées par deux contrôleurs aériens distincts, le contrôleur aérien qui écoute la deuxième fréquence de communication F2 dispose de toutes les informations envoyées automatiquement par l'aéronef 1.

Dans un mode particulier de réalisation, la troisième étape 33 comprend une première sous-étape 33a, libellée E3a sur la figure, au cours de laquelle la circuiterie électronique 14 élabore un deuxième message initial M2a puis commande l'envoi, par le dispositif de radiocommunication 18, du deuxième message initial M2a, le deuxième message initial M2a ayant pour objet d'informer le contrôle aérien de l'activation du guidage de l'aéronef selon la trajectoire de secours. La première sous-étape 33a est mise en œuvre au bout d'une durée prédéterminée Ts après la fin de la deuxième étape 32. Cette durée Ts est par exemple égale à 60 secondes. La troisième étape 33 comprend en outre une deuxième sous-étape 33b, libellée E3b sur la figure et mise en œuvre au bout d'une deuxième durée prédéterminée T2 après la première sous-étape 33a. Cette deuxième durée T2 est par exemple égale à 30 secondes. Au cours de la deuxième sous-étape 33b, la circuiterie électronique 14 commande l'envoi, par le dispositif de radiocommunication 18, d'un deuxième message subséquent M2b ayant pour objet de donner au contrôle aérien des informations relatives à la trajectoire de secours. Les contenus des messages M2a et M2b sont par exemple tels qu'illustrés sur la figure 5.

Après l'envoi de l'au moins un deuxième message, dans une quatrième étape 34, libellée E4 sur la figure, pendant le vol de l'aéronef selon la trajectoire de secours, la circuiterie électronique 14 reçoit de la deuxième source d'informations 16, des informations relatives à des manœuvres que l'aéronef va mettre en œuvre pour suivre la trajectoire de secours : par exemple un virage, un début de montée, un début de descente, etc. Suite à la réception d'informations relatives à l'une desdites manœuvres, la circuiterie électronique élabore un message Mm1, Mm2... puis commande l'envoi, par le dispositif de radiocommunication 18, sur la deuxième fréquence de communication F2, du message Mm1, Mm2..., le message Mm1, Mm2... ayant pour objet d'informer le contrôle aérien de ladite manœuvre que l'aéronef va mettre en œuvre. Ainsi, pendant le vol de l'aéronef le long de la trajectoire de secours, l'aéronef envoie un ensemble de messages sur la deuxième fréquence de communication, les messages de l'ensemble de messages ayant pour objet d'informer le contrôle aérien de manœuvres que l'aéronef va mettre en œuvre. La figure 5 illustre des exemples de contenu de tels messages Mm1, Mm2 ... Mm6. La deuxième source d'informations 16 correspond par exemple à un calculateur de guidage de l'aéronef, à un calculateur de gestion de vol de l'aéronef, ou encore à un calculateur avionique configuré pour détecter et gérer une situation d'incapacité d'un pilote de l'aéronef. Selon une première alternative, la première source d'informations 12 et la deuxième source d'informations 16 sont distinctes. Selon une deuxième alternative, la première source d'informations 12 et la deuxième source d'informations 16 correspondent à un même calculateur de l'aéronef. Selon une autre alternative, la première source d'informations 12, la deuxième source d'informations 16 et la circuiterie électronique 14 correspondent à un même calculateur de l'aéronef, par exemple un calculateur avionique configuré pour détecter et gérer une situation d'incapacité d'un pilote de l'aéronef.

De façon avantageuse, la quatrième étape comprend en outre l'envoi de messages additionnels Mp sur la deuxième fréquence de communication F2. Ces messages additionnels sont envoyés selon une période de temps prédéfinie Tp lorsqu'un intervalle temporel entre deux messages consécutifs, par exemple Mm1 et Mm2, de l'ensemble de messages est supérieur à ladite période Tp. La période Tp est par exemple égale à 7 minutes. Ces messages additionnels ont pour but de garder le contact avec le contrôle aérien avec une période de temps au plus égale à la période Tp.

Dans un mode particulier de réalisation, pendant la quatrième étape, lorsque la circuiterie électronique 14 reçoit une information issue de la deuxième source d'informations 16, relative à un événement survenu pendant le vol de l'aéronef selon la trajectoire de secours, la circuiterie électronique 14 commande l'envoi d'un message relatif à cet événement, par le dispositif de radiocommunication 18, sur la deuxième fréquence de communication F2 de façon à informer le contrôle aérien dudit événement. L'événement considéré est un événement relatif à l'aéronef ou à sa trajectoire, par exemple une dépressurisation, une panne, une modification de la météo entraînant une modification de la trajectoire, etc. La figure 5 illustre des exemples de contenu de messages Me1, Me2, Me3 relatifs à des événements.

Dans un mode de réalisation, lors du vol de l'aéronef le long d'une partie de la trajectoire de secours correspondant à une approche d'une piste d'atterrissage d'un aéroport, outre l'envoi des différents messages sur la deuxième fréquence de communication F2, la quatrième étape comprend l'envoi desdits différents messages sur une fréquence spécifique à cette approche. Cela permet ainsi d'envoyer ces messages vers un contrôleur aérien en charge des aéronefs atterrissant selon cette approche. Cela est avantageux en particulier si ce contrôleur aérien n'écoute pas la deuxième fréquence de communication F2 dédiée aux communications en situation d'urgence. De façon particulière, la partie de la trajectoire de secours correspondant à l'approche de la piste d'atterrissage commence à un point de début de descente de l'aéronef vers la piste d'atterrissage. Ce point est généralement appelé TOD (« Top Of Descent » en anglais).

Dans un mode avantageux de réalisation, le procédé comporte en outre une étape 31, libellée Et sur la figure 3, mise en œuvre après la première étape 30 et avant la deuxième étape 32, au cours de laquelle un code transpondeur de l'aéronef utilisé pour les communications vers le contrôle aérien est remplacé par un code transpondeur spécifique à une situation d'urgence. Ce code transpondeur spécifique correspond par exemple au code 7700. Cela permet de davantage attirer l'attention du contrôle aérien sur la situation d'urgence de l'aéronef.

De façon avantageuse, les différents messages envoyés par le système de communication vers le contrôle aérien sont préparés sous une forme textuelle par la circuiterie électronique, puis transformés en messages vocaux par synthèse vocale avant d'être envoyés sur la première ou sur la deuxième fréquence de communication. Ces messages sont préparés en temps réel par la circuiterie électronique 14 en fonction des conditions opérationnelles de l'aéronef.

## Revendications

1. Procédé de communication automatique d'un aéronef (1) vers au moins un centre de contrôle aérien, **caractérisé en ce qu'**il comprend les étapes suivantes mises en œuvre de façon automatique par une circuiterie électronique (14) embarquée dans l'aéronef :
- une première étape (30) consistant à recevoir une information relative à l'activation d'un guidage automatique de l'aéronef selon une trajectoire de secours lors d'une situation d'incapacité d'un pilote de l'aéronef, la trajectoire de secours correspondant à une trajectoire déterminée de façon automatique par un système avionique de l'aéronef en réponse à une détection de la situation d'incapacité du pilote ;
- une deuxième étape (32) consistant à élaborer puis à envoyer au moins un premier message (M1a, M1b) sur une première fréquence de communication (F1) sélectionnée avant l'activation du guidage de l'aéronef selon la trajectoire de secours, cet au moins un premier message ayant pour objet d'informer le contrôle aérien d'une part de l'activation du guidage automatique de l'aéronef selon la trajectoire de secours et d'autre part de la poursuite de l'envoi de messages sur une deuxième fréquence de communication (F2) dédiée aux communications en situation d'urgence ;
- une troisième étape (33) consistant à élaborer puis à envoyer au moins un deuxième message (M2a, M2b) sur la deuxième fréquence de communication (F2), ce deuxième message ayant pour objet d'informer le contrôle aérien de l'activation du guidage automatique de l'aéronef selon la trajectoire de secours ;
- une quatrième étape (34), pendant le vol de l'aéronef selon la trajectoire de secours, consistant à recevoir des informations relatives à des manœuvres que l'aéronef va mettre en œuvre pour suivre la trajectoire de secours, et à élaborer puis envoyer un ensemble de messages (Mm1 ... Mm6) sur la deuxième fréquence de communication (F2), les messages de l'ensemble de messages ayant pour objet d'informer le contrôle aérien de manœuvres que l'aéronef va mettre en œuvre.

2. Procédé selon la revendication 1, **caractérisé en ce que** les différents messages envoyés vers le centre de contrôle aérien sont des messages audio produits par synthèse vocale.

3. Procédé selon l'une des revendications 1 ou 2, **caractérisé en ce qu'**il comporte une étape (31), avant la deuxième étape, au cours de laquelle un code transpondeur de l'aéronef utilisé pour les communications vers le contrôle aérien est remplacé par un code transpondeur spécifique à une situation d'urgence.

4. Procédé selon l'une quelconque des revendications précédentes, **caractérisé en ce que** la deuxième étape (32) comprend une première sous-étape (32a) d'élaboration puis d'envoi d'un premier message initial (M1a) ayant pour objet d'informer le contrôle aérien de l'activation du guidage automatique de l'aéronef selon la trajectoire de secours, ainsi qu'une deuxième sous-étape (32b) mise en œuvre au bout d'une première durée prédéterminée (T1) après la première sous-étape, d'envoi d'un premier message subséquent (M1b) ayant pour objet d'une part de rappeler au contrôle aérien l'activation du guidage automatique de l'aéronef selon la trajectoire de secours et d'autre part d'informer le contrôle aérien de la poursuite de l'envoi de messages sur la deuxième fréquence de communication (F2) dédiée aux communications en situation d'urgence.

5. Procédé selon l'une quelconque des revendications précédentes, **caractérisé en ce que** la troisième étape (33) comprend une première sous-étape (33a) d'élaboration puis d'envoi d'un deuxième message initial (M2a) ayant pour objet d'informer le contrôle aérien de l'activation du guidage automatique de l'aéronef selon la trajectoire de secours, ainsi qu'une deuxième sous-étape (33b) mise en œuvre au bout d'une deuxième durée prédéterminée (T2) après la première sous-étape, d'élaboration puis d'envoi d'un deuxième message subséquent (M2b) ayant pour objet de donner au contrôle aérien des informations relatives à la trajectoire de secours.

6. Procédé selon l'une quelconque des revendications précédentes, **caractérisé en ce que** la quatrième étape (34) comprend en outre l'envoi de messages additionnels (Mp) sur la deuxième fréquence, ces messages additionnels étant envoyés selon une période de temps (Tp) prédéfinie lorsqu'un intervalle temporel entre deux messages consécutifs de l'ensemble de messages est supérieur à ladite période.

7. Procédé selon l'une quelconque des revendications précédentes, **caractérisé en ce que** la quatrième étape (34) comprend en outre l'envoi de messages (Me1, Me2, Me3) relatifs à des événements survenant pendant le vol de l'aéronef selon la trajectoire de secours.

8. Procédé selon l'une quelconque des revendications précédentes, **caractérisé en ce que** lors du vol de l'aéronef le long d'une partie de la trajectoire de secours correspondant à une approche d'une piste d'atterrissage d'un aéroport, la quatrième étape (34) comprend en outre l'envoi des différents messages sur une fréquence spécifique à cette approche.

9. Système de communication (10) embarqué à bord d'un aéronef (1), **caractérisé en ce qu'**il comprend de la circuiterie électronique (14) prévue pour mettre en œuvre un procédé de communication selon l'une quelconque des revendications précédentes.

10. Aéronef (1), **caractérisé en ce qu'**il comprend un système de communication (10) selon la revendication précédente.

## Patentansprüche

1. Verfahren zur automatischen Kommunikation eines Luftfahrzeugs (1) zu mindestens einem Flugverkehrskontrollzentrum, **dadurch gekennzeichnet, dass** es die folgenden Schritte umfasst, die automatisch durch eine elektronische Schaltungsanordnung (14) an Bord des Luftfahrzeugs durchgeführt werden:
- einen ersten Schritt (30), der darin besteht, eine Information über die Aktivierung einer automatischen Führung des Luftfahrzeugs entlang einer Notfalltrajektorie während einer Situation einer Handlungsunfähigkeit eines Piloten des Luftfahrzeugs zu empfangen, wobei die Notfalltrajektorie einer Trajektorie entspricht, die automatisch durch ein Avioniksystem des Luftfahrzeugs als Reaktion auf eine Detektion der Situation der Handlungsunfähigkeit des Piloten bestimmt wird;
- einen zweiten Schritt (32), der darin besteht, mindestens eine erste Nachricht (M1a, M1b) zu erarbeiten und dann auf einer ersten Kommunikationsfrequenz (F1) zu senden, die vor der Aktivierung der Führung des Luftfahrzeugs entlang der Notfalltrajektorie ausgewählt wurde, wobei diese mindestens eine erste Nachricht bezweckt, die Flugverkehrskontrolle zum einen über die Aktivierung der automatischen Führung des Flugzeugs entlang der Notfalltrajektorie und zum anderen über die Fortsetzung des Sendens von Nachrichten auf einer zweiten Kommunikationsfrequenz (F2), die für Kommunikationen in Notfallsituationen dediziert ist, zu informieren;
- einen dritten Schritt (33), der darin besteht, mindestens eine zweite Nachricht (M2a, M2b) zu erarbeiten und dann auf der zweiten Kommunikationsfrequenz (F2) zu senden, wobei diese zweite Nachricht bezweckt, die Flugverkehrskontrolle über die Aktivierung der automatischen Führung des Luftfahrzeugs entlang der Notfalltrajektorie zu informieren;
- einen vierten Schritt (34), während des Flugs des Luftfahrzeugs entlang der Notfalltrajektorie, der darin besteht, Informationen über Manöver zu empfangen, die das Luftfahrzeug durchführen wird, um der Notfalltrajektorie zu folgen, und eine Reihe von Nachrichten (Mm1 ... Mm6) zu erarbeiten und dann auf der zweiten Kommunikationsfrequenz (F2) zu senden, wobei die Nachrichten der Reihe von Nachrichten bezwecken, die Flugverkehrskontrolle über Manöver zu informieren, die das Luftfahrzeug durchführen wird.

2. Verfahren nach Anspruch 1, **dadurch gekennzeichnet, dass** die verschiedenen an das Flugverkehrskontrollzentrum gesendeten Nachrichten durch Sprachsynthese erzeugte Audionachrichten sind.

3. Verfahren nach einem der Ansprüche 1 oder 2, **dadurch gekennzeichnet, dass** es vor dem zweiten Schritt einen Schritt (31) umfasst, während dessen ein Transpondercode des Luftfahrzeugs, der für die Kommunikation mit der Flugverkehrskontrolle verwendet wird, durch einen spezifischen Transpondercode für eine Notfallsituation ersetzt wird.

4. Verfahren nach einem der vorhergehenden Ansprüche, **dadurch gekennzeichnet, dass** der zweite Schritt (32) einen ersten Teilschritt (32a) des Erarbeitens und anschließenden Sendens einer ersten Ausgangsnachricht (M1a), die bezweckt, die Flugverkehrskontrolle über die Aktivierung einer automatischen Führung des Luftfahrzeugs entlang der Notfalltrajektorie zu informieren, sowie einen nach einer ersten vorbestimmten Zeit (T1) nach dem ersten Teilschritt durchgeführten zweiten Teilschritt (32b) des Sendens einer ersten Folgenachricht (M1b), die bezweckt, die Flugverkehrskotrolle zum einen an die Aktivierung der automatischen Führung des Flugzeugs entlang der Notfalltrajektorie zu erinnern und die Flugverkehrskontrolle zum anderen über die Fortsetzung des Sendens von Nachrichten auf der zweiten Kommunikationsfrequenz (F2), die für die Kommunikation in Notsituationen bestimmt ist, zu informieren, umfasst.

5. Verfahren nach einem der vorhergehenden Ansprüche, **dadurch gekennzeichnet, dass** der dritte Schritt (33) einen ersten Teilschritt (33a) des Erarbeitens und anschließenden Sendens einer zweiten Ausgangsnachricht (M2a), die bezweckt, die Flugverkehrskontrolle über die Aktivierung der automatischen Führung des Luftfahrzeugs entlang der Notfalltrajektorie zu informieren, sowie einen nach einer zweiten vorbestimmten Zeit (T2) nach dem ersten Teilschritt durchgeführten zweiten Teilschritt (33b) des Erarbeitens und anschließenden Sendens einer zweiten Folgenachricht (M2b), die bezweckt, der Flugverkehrskotrolle Informationen über die Notfalltrajektorie zu geben, umfasst.

6. Verfahren nach einem der vorhergehenden Ansprüche, **dadurch gekennzeichnet, dass** der vierte Schritt (34) ferner das Senden zusätzlicher Nachrichten (Mp) auf der zweiten Frequenz umfasst, wobei diese zusätzlichen Nachrichten gemäß einer vorgegebenen Zeitperiode (Tp) gesendet werden, wenn ein Zeitintervall zwischen zwei aufeinanderfolgenden Nachrichten der Reihe von Nachrichten größer als diese Periode ist.

7. Verfahren nach einem der vorhergehenden Ansprüche, **dadurch gekennzeichnet, dass** der vierte Schritt (34) ferner das Senden von Nachrichten (Me1, Me2, Me3) über Ereignisse umfasst, die während des Flugs des Luftfahrzeugs entlang der Notfalltrajektorie eintreten.

8. Verfahren nach einem der vorhergehenden Ansprüche, **dadurch gekennzeichnet, dass** während des Flugs des Luftfahrzeugs entlang eines Teils der Notfalltrajektorie, der einem Anflug an eine Landebahn eines Flughafens entspricht, der vierte Schritt (34) ferner das Senden der verschiedenen Nachrichten auf einer spezifischen Frequenz für diesen Anflug umfasst.

9. Kommunikationssystem (10) an Bord eines Luftfahrzeugs (1), **dadurch gekennzeichnet, dass** es eine elektronische Schaltungsanordnung (14) umfasst, die dazu vorgesehen ist, ein Verfahren zur Kommunikation nach einem der vorhergehenden Ansprüche durchzuführen.

10. Luftfahrzeug (1), **dadurch gekennzeichnet, dass** es ein Kommunikationssystem (10) nach dem vorhergehenden Anspruch umfasst.

## Claims

1. Automatic communication method for an aircraft (1) with at least one air traffic control centre, **characterized in that** it comprises the following steps implemented automatically by electronic circuitry (14) on board the aircraft:
- a first step (30) consisting of receiving information relating to the activation of automatic guidance of the aircraft along a contingency trajectory in a situation in which a pilot of the aircraft is incapacitated, the contingency trajectory corresponding to a trajectory determined automatically by an avionics system of the aircraft in response to detection of the situation in which the pilot is incapacitated;
- a second step (32) consisting of preparing then sending at least a first message (M1a, M1b) on a first communication frequency (F1) selected before the activation of guidance of the aircraft along the contingency trajectory, this at least one first message being intended to inform air traffic control on one hand of the activation of automatic guidance of the aircraft along the contingency trajectory, and on the other hand of the sending of further messages on a second communication frequency (F2) used for emergency communications;
- a third step (33) consisting of preparing then sending at least one second message (M2a, M2b) on the second communication frequency (F2), this second message being intended to inform air traffic control of the activation of automatic guidance of the aircraft along the contingency trajectory;
- a fourth step (34), while the aircraft is flying along the contingency trajectory, consisting of receiving information relating to manoeuvres that the aircraft will implement to follow the contingency trajectory, and preparing then sending a set of messages (Mm1 ... Mm6) on the second communication frequency (F2), the messages of the set of messages being intended to inform air traffic control of manoeuvres that the aircraft will implement.

2. Method according to Claim 1, **characterized in that** the different messages sent to the air traffic control centre are audio messages produced by speech synthesis.

3. Method according to either of Claims 1 and 2, **characterized in that** it includes a step (31), before the second step, during which a transponder code of the aircraft used for communication with air traffic control is replaced by a transponder code specific to emergency situations.

4. Method according to any one of the preceding claims, **characterized in that** the second step (32) comprises a first sub-step (32a) of preparing then sending a first initial message (M1a) that is intended to inform air traffic control of the activation of automatic guidance of the aircraft along the contingency trajectory, as well as a second sub-step (32b) implemented after a first predetermined time (T1) after the first sub-step, of sending a first subsequent message (M1b) that is intended on one hand to remind air traffic control of the activation of automatic guidance of the aircraft along the contingency trajectory, and on the other hand to inform air traffic control of the sending of further messages on the second communication frequency (F2) used for emergency communications.

5. Method according to any one of the preceding claims, **characterized in that** the third step (33) comprises a first sub-step (33a) of preparing then sending a second initial message (M2a) that is intended to inform air traffic control of the activation of automatic guidance of the aircraft along the contingency trajectory, as well as a second sub-step (33b) implemented after a second predetermined time (T2) after the first sub-step, of preparing then sending a second subsequent message (M2b) that is intended to give air traffic control information relating to the contingency trajectory.

6. Method according to any one of the preceding claims, **characterized in that** the fourth step (34) further comprises sending additional messages (Mp) on the second frequency, these additional messages being sent at a predefined time period (Tp) if a time interval between two consecutive messages of the set of messages is greater than said period.

7. Method according to any one of the preceding claims, **characterized in that** the fourth step (34) further comprises sending messages (Me1, Me2, Me3) relating to events occurring during the flight of the aircraft along the contingency trajectory.

8. Method according to any one of the preceding claims, **characterized in that**, when the aircraft is flying along a part of the contingency trajectory corresponding to an airport runway approach, the fourth step (34) further comprises sending different messages on a frequency specific to this approach.

9. Communication system (10) carried on board an aircraft (1), **characterized in that** it comprises electronic circuitry (14) provided to implement a communication method according to any one of the preceding claims.

10. Aircraft (1), **characterized in that** it comprises a communication system (10) according to the preceding claim.
